# EUROPEAN PATENT SPECIFICATION

(11) **EP 0 631 162 B1**
(45) Date of publication and mention of the grant of the patent: **09.09.1998**
(21) Application number: 94304329.9
(22) Date of filing: 15.06.1994
(51) Int. Cl.: G02B 6/38, G02B 6/42

(54) **Optical fiber bonding techniques**
Befestigungsverfahren für Glasfasern
Procédé de liaison de fibres optiques

(30) Priority: 25.06.1993 US 81720
(43) Date of publication of application: 28.12.1994
(73) Proprietor: AT&T Corp., New York, NY 10013-2412 (US)
(72) Inventor: Coucoulas, Alexander, Basking Ridge, New Jersey 07920 (US); Dutta, Ranjan, Lawrenceville, New Jersey 08648 (US)
(74) Representative: Johnston, Kenneth Graham

(56) References cited:
- EP-A- 0 529 953
- EP-A- 0 542 444
- DE-A- 3 443 693
- DE-A- 3 810 044
- US-A- 4 818 058
- US-A- 5 178 319

## Description

### Technical Field

This invention relates to compression bonding methods and, more particularly, to methods for bonding optical fibers to aluminum coated substrates.

### Background of the Invention

Optical communications systems commonly use optical fibers for carrying very large quantities of information with low distortion and low cost over great distances. Optical systems are also promising for such purposes as computing because of the inherently high speed at which they can be operated. For these reasons, considerable development work has been done on methods for packaging and connecting optical fibers.

For example, the U. S. patent of Bonanni, No. 4,818,058, granted April 4, 1989, and the U. S. patent of Bonanni et al., No. 4,998,796, granted March 12, 1991, hereby incorporated herein by reference, describe optical fiber connectors comprising silicon chips for holding in place a plurality of fibers of an optical fiber ribbon. Silicon is a monocrystalline material in which small V-grooves can be very accurately formed by photolithographic masking and etching. Optical fibers having a typical diameter of one hundred twenty-five microns can be held in place by matching opposite V-grooves that are each about one hundred microns deep and one hundred forty microns wide. The matching V-grooves of opposing silicon chips accurately position the fibers, the fibers being permanently held in place by an adhesive such as an epoxy.

The U. S. patent of Coucoulas, No. 5,178,319, granted January 12, 1993, hereby incorporated herein by reference, teaches that an optical fiber can be bonded within the V-groove of a silicon substrate by coating the V-groove with aluminum and applying heat and pressure. The resulting thermo-compression bond can securely contain the optical fiber within the V-groove, thus avoiding the need for an adhesive, which may contaminate other elements of a photonics package. It would appear that the Coucoulas invention could be routinely applied to the connector packages of Bonanni et al. so as to avoid the adhesive required in making the connectors described in the Bonanni patents. Experience has shown, however, that when the V-grooves of a connector such as that described in the Bonanni patents are aluminized, and the opposite silicon elements are compressed against heated optical fibers to make the bond, the resulting bond is sometimes not reliable. It appears that certain of the optical fibers are not sufficiently compressed into the aluminum coating to make a satisfactory bond, and the force needed to give reliable bonding along the lengths of a multiplicity of fibers has sometimes been found to be beyond that that can be exerted on the silicon chips. That is, if too much force is applied, the silicon chips may crack. There is therefore a continuing need in the industry for methods for more expediently and reliably bonding optical fibers to substrates and, more particularly, methods for expediently assembling optical fiber connectors using V-grooves etched in monocrystalline materials.

EP-A-0 542 444 describes a technique for bonding optical elements to aluminized indentations in a substrate by thermo-compression bonding.

According to the present invention, there is provided a method as defined in claim 1.

In accordance with an illustrative embodiment of the invention, first and second V-grooves are respectively formed in first and second monocrystalline semiconductor elements. Matching aluminum layers are formed in the first and second V-grooves, but each aluminum layer extends only along a portion of the length of its respective groove. An optical fiber is located between the first and second grooves and is heated and compressed between the opposite first and second monocrystalline elements, the heat and pressure being sufficient to cause bonding between the aluminum layer and the optical fiber. By aluminizing only matching portions of the grooves, rather than their entire lengths, the compressive forces applied to the first and second monocrystalline elements are concentrated at the interfaces of the aluminum layers with the optical fiber. This increases the pressure between the optical fiber and the aluminum beyond that which would occur if the entire lengths of the V-grooves were aluminized. As a consequence, the bonding is reliable.

These and other objects, features and advantages of the invention will be better understood from a consideration of the following detailed description taken in conjunction with the accompanying drawing.

### Brief Description of the Drawing

FIG. 1 is an exploded view of apparatus for assembling an optical fiber connector in accordance with one embodiment of the invention;
FIG. 2 is a view taken along lines of 2-2 of FIG. 1; and
FIG. 3 is a view taken along lines 3-3 of FIG. 2.

### Detailed Description

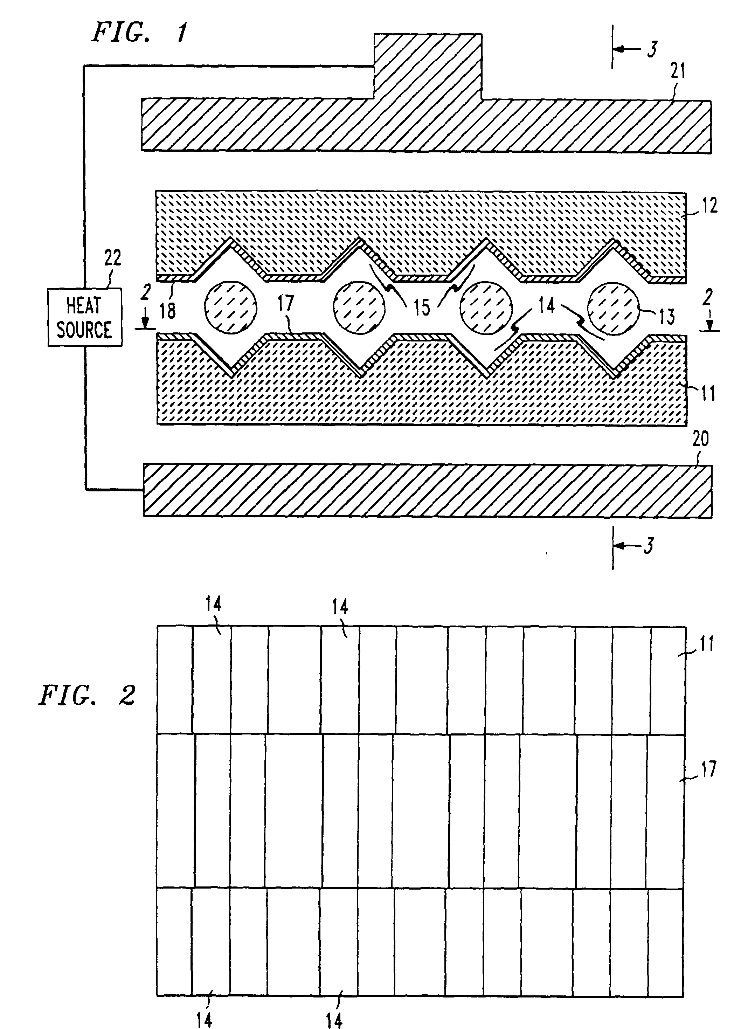

The drawings are only schematic, with certain dimensions being distorted to aid in clarity of exposition. Referring now to FIG. 1, there is shown an exploded view of apparatus for assembling an optical fiber connector assembly comprising first and second monocrystalline semiconductor chips 11 and 12 for containing therebetween a plurality of optical fibers 13. V-grooves 14 and 15 are respectively formed in chips 11 and 12 by photolithographic masking and etching in accordance with the principles described in the aforementioned Bonanni patent. The optical fibers are typically only about 1.25x10⁻⁴m (one hundred twenty-five microns) in diameter; the masking and etching can define the V-grooves 14 and 15 with great accuracy, so that opposite grooves precisely contain between them an optical fiber, as is required for aligning the fibers with other fibers, with lenses and the like.

In accordance with the principles described in the aforementioned Coucoulas patent, the V-grooves 14 and 15 are coated with layers 17 and 18 of aluminum. The optical fibers 13 are permanently bonded to chips 11 and 12 by compressing them between chips 11 and 12, using a tool having opposite press members 20 and 21. The press members are shown as being heated by a heat source 22. The purpose of the heat source is to heat the interface of the optical fibers 13 and the aluminum layers 17 and 18 as they are being compressed between press members 20 and 21. Alternatively, the heat could be applied to the chips 11 and 12, or the assembly shown could be contained within a furnace. The fibers are typically heated to a temperature of four hundred to four hundred fifty degrees Centigrade, and, with a sufficient pressure applied, will bond permanently to aluminum layers 17 and 18 without distorting and without damaging the monocrystalline chips 11 and 12.

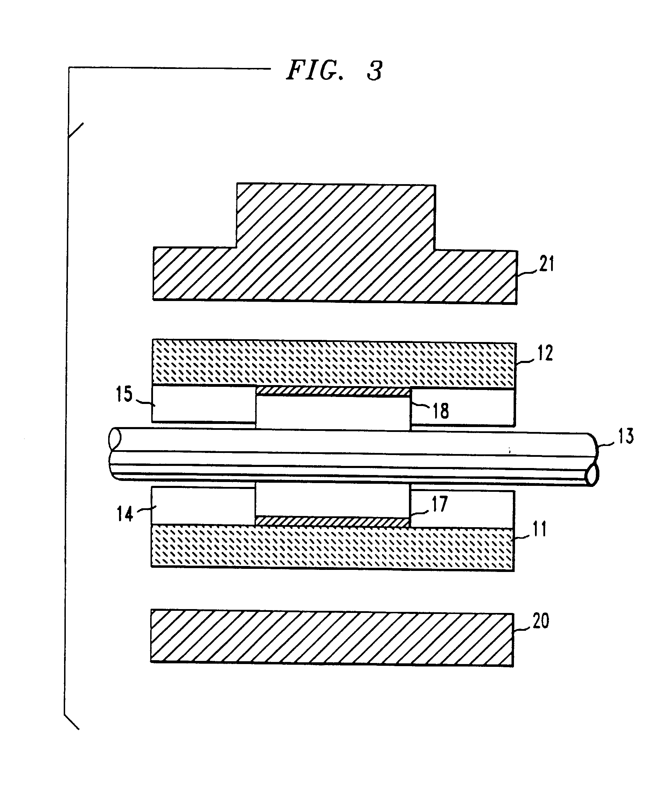

In accordance with the invention, as shown in FIG. 2, the aluminum layer 17 covers only a portion of the length of each V-groove 14. In the example shown, the aluminum layer 17 covers only about one-third of the length of each V-groove 14. As shown in FIG. 3, the aluminum layer 18 matches the geometry of aluminum layer 17 so that it likewise covers only about one-third the length of each of the V-grooves 15, and lies on the side of the fiber 13 opposite layer 17. Making the aluminum layers 17 and 18 shorter than the lengths of grooves 14 and 15 has the effect of concentrating the forces applied by pressing members 20 and 21 to the aluminum layers 17 and 18. As a consequence, the pressure (force per unit of area) applied at the interfaces of aluminum layers 17 and 18 with the optical fibers 13 is greater than it would be if the aluminum were coated along the entire length of each V-groove.

In one experiment, the opposite chips each contained only a single V-groove which held between them a single optical fiber. The V-groove had a length of ten millimeters that was entirely coated with aluminum. The assembly was heated to four hundred to four hundred fifty degrees Centigrade, and a force of 24.51N (2.5 kilograms) was applied to the chips to compress the fiber between them. The compression was applied for five to ten seconds. There was no bonding.

An identical pair of chips having matching V-grooves ten millimeters long were coated with aluminum only over two to two and one-half millimeters of the lengths of the V-grooves. The assembly was again heated to four hundred to four hundred fifty degrees Centigrade. Instead of 24.51N (2.5 kilograms) a force of only 4.9N (five hundred grams) was applied to compress the chips for five to ten seconds. This was found to give a reliable bond along the entire length of the aluminized portion of the V-grooves. Thus, a force of only one-fifth the force used in the unsuccessful experiment gave reliable bonding.

We have not done a detailed analysis of the relationship between the concentration of forces and the effectiveness of the bond. There does, however, appear to be a roughly linear correlation between the reduction of the length of the groove that is aluminized with the reduction of force required for making a bond. Thus, for example, if one reduces the length of the groove that is aluminized by eighty percent, it appears that one can use eighty percent less force in making the bond because of the concentration of the forces as described above. If less than half of the lengths of the grooves are aluminized, only half the force otherwise required can be used to make reliable bonds. This is significant because monocrystalline silicon cannot withstand excessive force, and if many grooves and many fibers were to be bonded simultaneously, it is difficult to apply sufficient force for reliable bonds if there is not a concentration of forces in accordance with the invention. The invention also allows more deviation of the parallel configuration of press members 20 and 21. That is, without the invention, slight deviations from a precisely parallel configuration will give a maldistribution of forces on the fibers that may crack the silicon or may leave certain fibers unbonded.

While the invention is particularly applicable to structures of the type described in the Bonanni patent, using V-grooves for supporting glass optical fibers, it is potentially useful in other configurations as well. As mentioned in the Coucoulas patent, acoustic energy can be applied to the glass-aluminum interface, rather than heat, to permit the compression bonding. The invention could be used to aid in bonding fibers to horizontal surfaces.

## Claims

1. A method for bonding an optical fiber (13) to first and second V-grooves (14, 15) in first and second monocrystalline members (11, 12), respectively;
positioning the optical fiber (13) to contact the first and second V-grooves (14, 15) in the first and second members (11, 12), respectively; and
simultaneously applying forces for pressing together the optical fiber (13) and the members (11, 12) and applying energy to the interface of the optical fiber (13) and the V-grooves (14, 15)
CHARACTERIZED BY:
coating with aluminum only a portion of the length of each V-groove in each member with which the optical fiber (13) makes contact; and thereby
concentrating the pressure at the interface of the optical fiber (13) with the aluminum-coated V-grooves (14, 15),
wherein the coating step comprises the step of forming an aluminum layer as a continuous strip that extends transversely to the V-grooves (14, 15).

2. The method of claim 1 wherein:
less than half the length of the V-groove in each member with which the optical fiber (13) makes contact is coated with said aluminum; and
the pressing forces are applied along the entire length of the members.

3. The method of claim 1 wherein:
the first and second members (11, 12) are each made of a semiconductor material; and
the first and second V-grooves (14, 15) are made by photolithographic masking and etching.

4. The method of claim 1 wherein:
the energy applied is heat energy.

5. The method of claim 1 wherein:
the aluminum strip has a thickness of 3 to 5x10⁻⁶m (three to five micrometers) and a width of about 2.5 millimeters; and
the first and second V-grooves (14, 15) each have a length of about ten millimeters.

6. The method of claim 1 wherein:
the first and second members (11, 12) are silicon chips; and
the pressing step comprises the step of compressing the silicon chips between opposite press members that have been heated.

## Patentansprüche

1. Verfahren zum Befestigen einer optischen Faser (13) in ersten und zweiten V-förmigen Nuten (14, 15) von jeweils ersten und zweiten monokristallinenen Elementen (11, 12),
mit folgenden Schritten:
Positionieren der optischen Faser (13) derart, daß sie die ersten und zweiten V-förmigen Nuten (14, 15) des jeweiligen ersten bzw. zweiten Elementes (11, 12) kontaktiert, und
gleichzeitiges Anlegen von Kräften zum Zusammenpressen der optischen Faser (13) und den Elementen (11, 12) sowie Zuführen von Energie an der Stelle, an der die optische Faser (13) die V-förmigen Nuten (14, 15) berührt,
gekennzeichnet durch die Schritte:
Beschichten mit Aluminium nur eines Abschnitts der Länge der V-förmigen Nuten jeden Elements, mit denen die optische Faser (13) einen Kontakt herstellt; und damit
Konzentrieren des Drucks an der Verbindungsstelle der optischen Faser (13) und der aluminiumbeschichteten V-förmigen Nuten (14, 15),
wobei der Schritt zur Beschichtung den Schritt des Bildens einer Aluminiumschicht als kontinuierlichen Streifen umfaßt, der sich quer zu den V-förmigen Nuten (14, 15) erstreckt.

2. Verfahren nach Anspruch 1,
bei dem weniger als die halbe Länge der V-förmigen Nuten jeden Elements, mit dem die optische Faser (13) einen Kontakt herstellt, mit Aluminium beschichtet ist; und bei dem
die Druckkräfte entlang der gesamten Länge der Elemente angelegt werden.

3. Verfahren nach Anspruch 1,
bei dem das erste und zweite Element (11, 12) aus Halbleitermaterial hergestellt sind; und
die erste und zweite V-förmige Nuten (14, 15) durch photolithographisches Maskieren und Ätzen hergestellt werden.

4. Verfahren nach Anspruch 1,
bei dem die zugeführte Energie Wärmeenergie ist.

5. Verfahren nach Anspruch 1,
bei dem der Aluminiumstreifen eine Dicke von 3 bis 5 x 10⁻⁶ m (drei bis fünf Mikrometer) und eine Breite von etwa 2,5 mm aufweist; und
die ersten und zweiten V-förmigen Nuten (14, 15) jeweils eine Länge von etwa 10 mm besitzt.

6. Verfahren nach Anspruch 1,
bei dem das erste und zweite Element (11, 12) ein Siliziumchip ist; und
daß der Schritt des Pressens den Schritt des Zusammendrückens des Siliziumchips durch zwei sich gegenüberliegende Druckelemente umfaßt, die erwärmt worden sind.

## Revendications

1. Procédé de liaison d'une fibre (13) optique à des première et seconde gorges (14,15) en V de premier et second éléments (11,12) monocristallins respectivement; qui consiste
à mettre la fibre (13) optique en position de manière qu'elle vienne en contact avec les première et seconde gorges (14,15) en V du premier et du second élément (11,12) respectivement; et
simultanément à appliquer des forces pour presser ensemble la fibre (13) optique et les éléments (11,12) et à appliquer de l'énergie à l'interface de la fibre (13) optique et des gorges (14,15) en V,
caractérisé en ce qu'il consiste:
à revêtir d'aluminium seulement une partie de la longueur de chaque gorge en V de chaque élément avec laquelle la fibre (13) optique est en contact; et ainsi
à concentrer la pression à l'interface de la fibre (13) optique ayant les gorges (14,15) en V revêtues d'aluminium,
le stade de revêtement comprenant le stade de formation d'une couche d'aluminium sous la forme d'une bande continue qui s'étend transversalement aux gorges (14,15) en V.

2. Procédé suivant la revendication 1, dans lequel:
moins de la moitié de la longueur de la gorge en V de chaque élément, avec laquelle la fibre (13) optique est en contact, est revêtue d'aluminium; et
les forces de pression sont appliquées sur toute la longueur des éléments.

3. Procédé suivant la revendication 1, dans lequel:
les premier et second éléments (11,12) sont chacun en un matériau semi-conducteur; et
les première et seconde gorges (14,15) en V sont fabriquées par masquage photolithographique et attaque chimique.

4. Procédé suivant la revendication 1, dans lequel:
l'énergie appliquée est de l'énergie calorifique.

5. Procédé suivant la revendication 1, dans lequel:
la bande d'aluminium a une épaisseur de 3 à 5x10⁻⁶m (trois à cinq micromètres) et une largeur de 2,5 millimètres environ; et
les première et seconde gorges (14,15) en V ont chacune une longueur de dix millimètres environ.

6. Procédé suivant la revendication 1, dans lequel:
les premier et second éléments (11,12) sont des puces en silicium; et
le stade de pressage comprend le stade de compression des puces de silicium entre des éléments de pressage opposés qui ont été chauffés.
